## Europäisches Patentamt
## European Patent Office
## Office européen des brevets

(11) Veröffentlichungsnummer: **0 215 211**
**B1**

(12) **EUROPÄISCHE PATENTSCHRIFT**

(45) Veröffentlichungstag der Patentschrift:
08.06.88

(21) Anmeldenummer: **86108914.2**

(22) Anmeldetag: **01.07.86**

(51) Int. Cl.⁴: **B 64 C 13/26**

(54) Antriebs- und Führungsvorrichtung für an einem Flugzeugtragflügel angeordnetes Klappensystem.

(30) Priorität: **29.08.85 DE 3530865**

(43) Veröffentlichungstag der Anmeldung:
**25.03.87 Patentblatt 87/13**

(45) Bekanntmachung des Hinweises auf die Patenterteilung:
**08.06.88 Patentblatt 88/23**

(84) Benannte Vertragsstaaten:
**FR GB IT NL**

(56) Entgegenhaltungen:
**GB-A-2 096 551**
**US-A-1 540 104**

(73) Patentinhaber: **Messerschmitt- Bölkow- Blohm GmbH, Hünefeldstrasse 1-5, D-2800 Bremen 1 (DE)**

(72) Erfinder: **Pohl, Ulrich, Ing. grad., Am Wasser 19A, D-2820 Bremen (DE)**
Erfinder: **Renken, Jürgen, Dr.- Ing., D-2730 Freyersen nr. 12 (DE)**

LIBER, STOCKHOLM 1988

## Beschreibung

Die Erfindung betrifft eine Antriebs- und Führungsvorrichtung eines einem Flugzeugtragflügel angeordneten Klappensystems, insbesondere eines Hinterkantenklappensystems eines transsonischen Tragflügels für Transport- und Verkehrsflugzeuge, wobei das Klappensystem in Spannweitenrichtung in einzelne Segmente unterteilt ist, die über ihre Segmentspannweite jeweils begrenzt torsionsweich ausgebildet und die getrennt ansteuerbar sind, bestehend aus mit den Segmenten kraftschlüssig verbundenen, von einer Antriebseinheit beaufschlagten Spindelgetrieben sowie die Bahnkurve der Segmente beim Ein- und Ausfahren festlegenden Führungsschienen.

Die Verwendung von sogenannten Schienenkinematiken zum kontrollierten Verstellen von Klappensystemen an Flugzeugflügeln ist seit langem bekannt. Insbesondere werden Schienenkinematiken, wie sie der eingangs genannten Antriebs- und Führungsvorrichtung entsprechen, dazu verwendet, um die an den Tragflügelhinterkanten angeordneten Hochauftriebsklappen in ihre bei Start und Landung vorgesehenen Positionen auszufahren bzw. sie für die Reiseflugkonfiguration wieder einzufahren. Darüber hinaus können sie auch dazu verwendet werden, um die in den äußeren Tragflächenbereichen angeordneten, vorwiegend der Durchführung von Flugmanövern dienenden zusätzlichen Klappen die sogenannten Flaperons, zu verstellen.

Zusätzlich zu diesem herkömmlichen Gebrauch der am Flugzeugtragflügel angeordneten Hinterkantenklappen und damit auch der diese kontrollierenden Kinematiken ist in der DE-OS 3 114 143, die dem Obergriff des Anspruchs 1 entspricht, ein Verfahren vorgeschlagen worden, das der Verbesserung der aerodynamischen Effektivität eines insbesondere transsonischen Tragflügels dient und bei dem die Wölbung des Tragflügels in der Reiseflugphase in Abhängigkeit von den aktuellen Parametern, wie Flughöhe, Gewicht und Geschwindigkeit des Flugzeuges ebenso wie die Flügelfläche und die Dicke definiert verändert werden. Zur Realisierung dieser Änderungen werden bei diesem bekannten Verfahren unter anderem die bereits erwähnten, an der Flügelhinterkante angeordneten Klappensysteme verwendet, die zu diesem Zweck insbesondere begrenzt torsionsweich ausgebildet sein können.

Aufgabe der Erfindung ist es in diesem Zusammenhang, eine Antriebs- und Führungsvorrichtung der eingangs genannten Art so auszubilden, daß sie eine möglichst weitgehende Variation der Wölbungs- und Flächenveränderung vor allem auch in der Weise zuläßt, daß diese über die Spannweitenrichtung des Tragsflügels unterschiedlich stark durchgeführt werden kann.

Die Erfindung löst diese Aufgabe durch die im Kennzeichen des Patentanspruchs 1 angegebene Maßnahme. Vorteilhafte Weiterbildungen, die insbesondere eine möglichst einfache und zugleich effektive und funktionstüchtige Ausbildung der erfindungsgemäßen Antriebs- und Führungsvorrichtung zum Ziel haben, sind in den Unteransprüchen angegeben. Die Erfindung besitzt dabei den Vorteil, daß durch das breite Spektrum der mit dieser Antriebs- und Führungsvorrichtung zu realisierenden Wölbungs- und Flächenveränderungen das Profil des Tragflügels den jeweiligen aktuellen Anforderungen optimal angepaßt werden kann und daß insbesondere bei einer in Spannweitenrichtung unterschiedlich stark durchgeführten Wölbungsveränderungen die in den einzelnen Segmenten erzeugte Konturveränderung aerodynamisch glatt und stetig über den Tragflügel verläuft.

Im folgenden soll die Erfindung anhand der Zeichnung näher erläutert werden. Es zeigen:

Fig. 1 - 3 jeweils schematische Darstellungen eines Tragflügels mit verschiedenen Ausführungsformen der erfindungsgemäßen Antriebs- und Führungsvorrichtung,

Fig. 4 + 5 Detaildarstellungen der Antriebs- und Führungseinheiten für eine Hochauftriebsklappe,

Fig. 6 - 9 Einzelheiten der technischen Ausführung der in Fig. 3 dargestellten Anordnung sowie einer davon abweichenden Anordnung in jeweils zwei unterschiedlichen Versionen und

Fig. 10 drei Möglichkeiten für die mit der erfindungsgemäßen Antriebs- und Führungsvorrichtung realisierbaren Einstellungen der Hinterkantenklappen eines transsonischen Tragflügels.

In den Figuren sind gleiche bzw. einander entsprechende Bauteile mit den gleichen Bezugszeichen versehen.

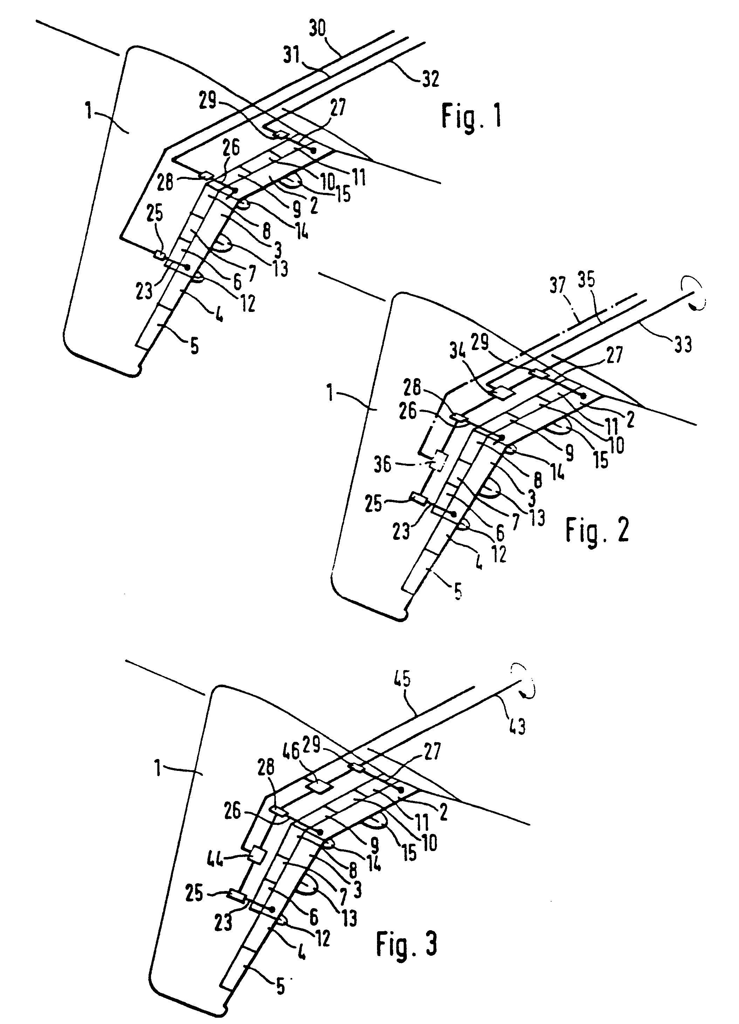

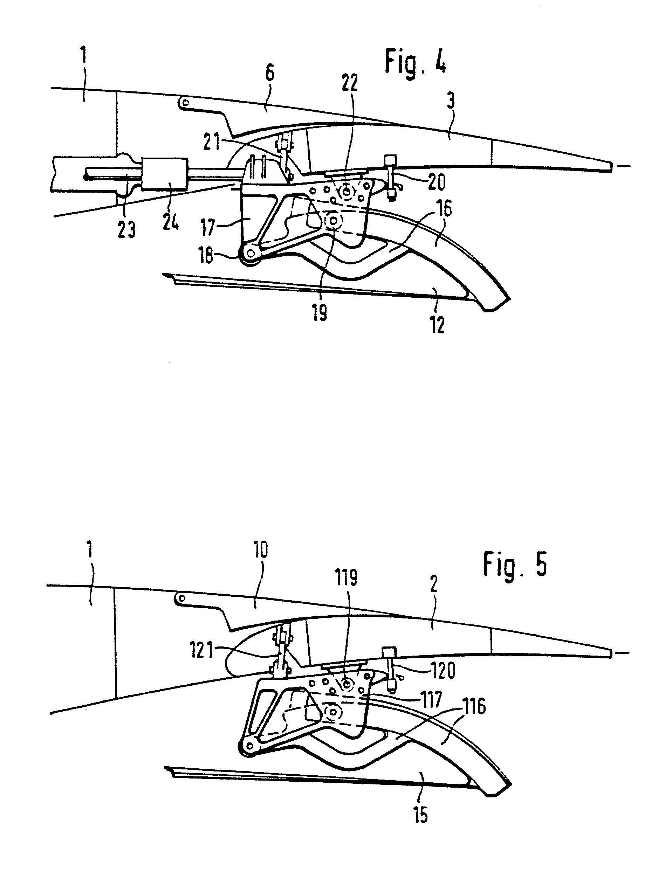

Bei den in den Figuren 1 bis 3 dargestellten Anordnungen handelt es sich jeweils um die linke Tragfläche 1 eines transsonischen Tragflügels für Verkehrs- und Transportflugzeuge. Die Hinterkante des Tragflügels ist mit einem Klappensystem versehen, das in einzelne Segmente 2 bis 5 unterteilt ist, von denen die Segmente 2 und 3 als in rückwärtiger Richtung aus- und einfahrbare Hochauftriebsklappen und die Segmente 4 und 5 als sogenannte Flaperons ausgebildet sind. Zusätzlich sind an der Tragfläche eine Reihe von Spoilern 6 bis 11 vorgesehen, deren rückwärtige Enden jeweils auf der zugeordneten Hochauftriebsklappe 2 bzw. 3 aufliegen. Ferner sind in den Figuren 1 bis 3 jeweils noch Verkleidungen 12 bis 15 zu erkennen, in denen zur erfindungsgemäßen Antriebs- und Führungsvorrichtung gehörige Führungsschienen angeordnet sind, auf die in Zusammenhang mit den Figuren 4 und 5 noch näher eingegangen wird.

Während der grundsätzliche Aufbau des Tragflügels mit den Segementen 2 bis 5, den Spoilern 6 bis 11 sowie den Verkleidungen 12 bis 15 in den Figuren 1 bis 3 der gleich ist, sind in diesen Figuren unterschiedliche Ausführungsbeispiele des zur erfindungsgemäßen Antriebs- und Führungsvorrichtung gehörigen Antriebssystems dargestellt. Zur Verdeutlichung dieser Unterschiede soll jedoch zunächst die in Fig. 4 im Detail dargestellte Anordnung näher erläutert werden, deren Aufbau für alle hier beschriebenen Ausführungsbeispiele der Erfindung identisch ist.

Wie aus dem in Fig. 4 dargestellten Detailschnitt durch den Hinterkantenbereich des in Fig. 1 dargestellten Tragflügels im Bereich der Verkleidung 12 zu erkennen ist, besteht der auf die Hochauftriebsklappe 3 (und analog auch auf die Hochauftriebsklappe 2) wirkende Teil der erfindungsgemäßen Antriebs- und Führungsvorrichtung aus einer zweigeteilten, gekrümmten Führungsschiene 16, in der eine Stützanordnung 17 für die Hochauftriebsklappe 3 auf Führungsrolle 18 und 19 beweglich gelagert ist. An dieser Stützanordnung 17 ist über zwei Koppelstangen 20 und 21 sowie über ein Drehgelenk 22 die Hochauftriebsklappe 3 beweglich gehalten. Als Antrieb für die Stützungsanordnung 17 und damit für die Hochauftriebsklappe 3 dient eine Spindelstange 23, die über eine Muffe 24 mit der Stützanordnung 17 verbunden ist.

Diese Spindelstange 23 wird, wie wiederum in den Figuren 1 bis 3 dargestellt, von einem Spindelgetriebe 25 beaufschlagt. Das gleiche gilt für zwei weitere in den Figuren 1 bis 3 dargestellte Spindelstangen 26 und 27, die von entsprechenden Spindelgetrieben 28 und 29 beaufschlagt werden. Gemäß der Erfindung ist nun das Antriebssystem für die Spindelgetriebe 25, 28 und 29 so ausgebildet, daß die Vorschubgeschwindigkeit der einzelnen Spindelgetriebe und damit der Spindelstangen 23, 26 und 27 unabhängig voneinander kontrollierbar sind.

Im Fall des in Fig. 1 dargestellten Ausführungsbeispiels wird dies dadurch gewährleistet, daß jedem der Spindelgetriebe 25, 28 und 29 eine separat ansteuerbare Antriebseinheit zugeordnet ist, die jeweils aus einer in der Zeichnung nicht dargestellten Antriebs-Steuer-Einheit (Power-Control-Unit, PCU) sowie einer jeweils zugehörigen, im Fall des hier gezeigten Ausführungsbeispiels hydraulischen Kraftübertragungseinrichtung 30, 31 und 32 besteht. Die einzelnen Antriebs-Steuer-Einheiten sind dabei im Flugzeugrumpf angeordnet.

Im Unterschied zu der in Fig. 1 dargestellten Anordnung werden bei dem in Fig. 2 gezeigten Ausführungsbeispiel der erfindungsgemäßen Antriebs- und Führungsvorrichtung die Spindelgetriebe 25, 28 und 29 von einer gemeinsamen Antriebswelle 33 beaufschlagt, die ihrerseits von einer im Bild nicht dargestellten Antriebs-Steuer-Einheit angetrieben wird. Um auch hier sicherzustellen, daß die einzelnen Spindelgetriebe 25, 28 und 29 mit unterschiedlicher Vorschubgeschwindigkeit operieren, ist zwischen wenigstens zwei benachbarten Spindelgetrieben 28 und 29 ein separat ansteuerbares Differentialgetriebe 34 geschaltet, das über einen Steuerpfad 35 kontrolliert werden kann. Wie in der Figur ferner angedeutet, kann vorzugsweise ein weiteres, ebenfalls ansteuerbares Differentialgetriebe 36 zwischen den beiden Spindelgetrieben 25 und 28 vorgesehen sein, so daß jeweils zwischen je zwei benachbarten Spindelgetrieben ein ansteuerbares Differentialgetriebe auf der Antriebswelle 33 angeordnet ist. Das zweite Differentialgetriebe 36 ist dabei über einen weiteren Steuerpfad 37 separat kontrollierbar.

Bei dem in Fig. 3 dargestellten Ausführungsbeispiel der erfindungsgemäßen Antriebs- und Führungsvorrichtung werden zwei auf einer gemeinsamen Antriebswelle 43 angeordnete Differentialgetriebe 44 und 46 über einen gemeinsamen Steuerpfad 45 kontrolliert.

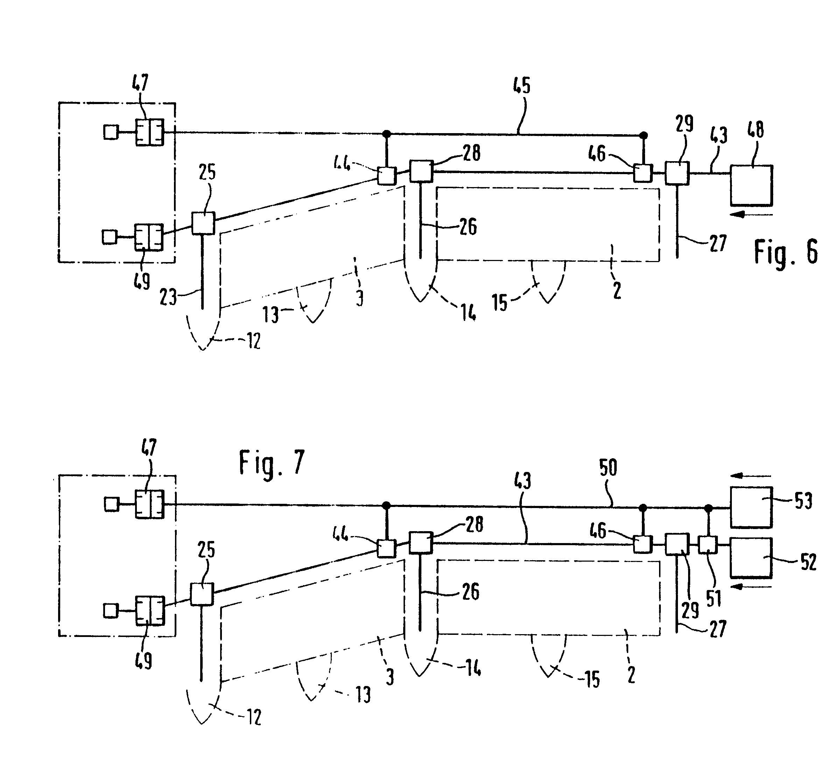

Die Figuren 6 und 7 zeigen anhand zwei er unterschiedlicher Ausführungs formen, wie die Ansteuerung der Differentialgetriebe in einer Anordnung entsprechend Fig. 3 realisiert werden kann. Im Fall der in Fig. 6 dargestellten Anordnung steht der Steuerpfad 45 in Form einer gebremsten Welle mit einer als Asymmetrieeinheit und Bremse wirkenden Anordnung 47 in kraftschlüssiger Verbindung. Wie die Figur ferner zeigt, steht auch die Antriebswelle 43, die von einer Antriebs-Steuer-Einheit 48 beaufschlagt wird, an ihrem der Antriebsseite abgewandten Ende mit einer ähnlichen Bremseinrichtung 49 in Verbindung.

Im Unterschied zur vorstehend beschriebenen Anordnung ist bei der in Fig. 7 gezeigten Anordnung ein weiteres Differentialgetriebe 51 vorgesehen, das zwischen der Antriebs-Steuer-Einheit 52 und dem ersten Spindelgetriebe 29 auf der Antriebswelle 43 zusätzlich angeordnet ist, die als Steuerpfad für die Differentialgetriebe 44, 46 und 51 dienende Welle 50 ist in diesem Fall außer mit der Asymmetrieeinheit und Bremse 47 antriebsseitig mit einer Hilfsantriebs-Steuer-Einheit (APCU) 53 verbunden, von der sie beaufschlagt wird.

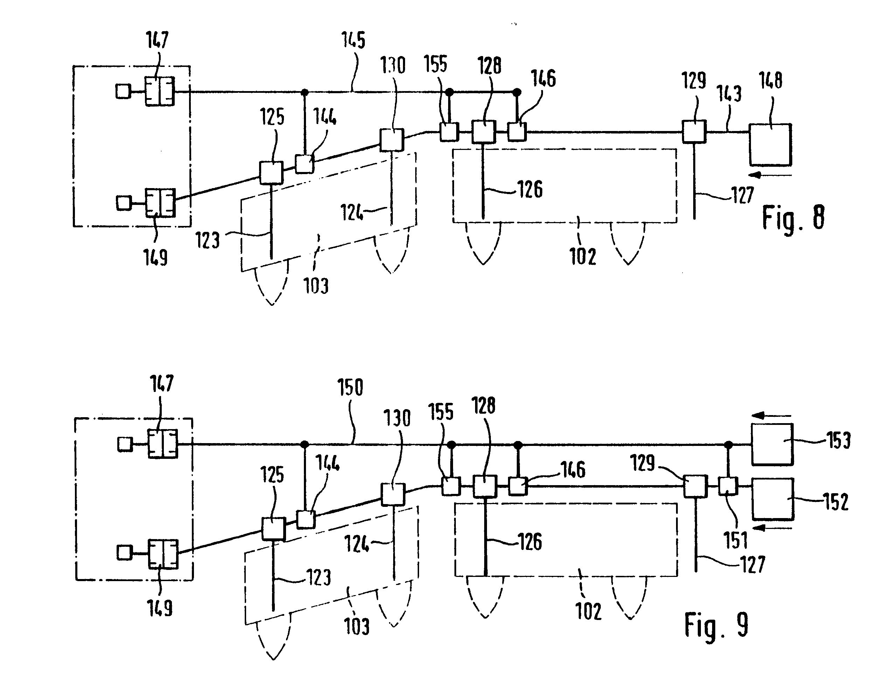

Bei sämtlichen bisher beschriebenen Anordnungen ist jeweils vorgesehen, daß die beiden einander benachbart liegenden Enden zweier an einer Tragfläche 1 angeordneten Hochauftriebsklappen 2 und 3 von einem gemeinsamen Spindelgetriebe verfahren werden. Im Unterschied dazu sind in den Figuren 8 und 9 zwei Anordnungen dargestellt, bei denen jede von zwei benachbart angeordneten Hochauftriebsklappen 102 und 103 über zwei separate Spindelgetriebe 125, 130 bzw. 128, 129 verfügt, deren Vorschubgeschwindigkeit getrennt und unabhängig voneinander kontrollierbar sind und die über die Spindelstangen 123, 124, 126 und 127 auf die Hochauftriebsklappen 102 bzw. 103 wirken. Auch hier sind, entsprechend den vorstehend beschriebenen Anordnungen, Differentialgetriebe, 144, 146, 155 eine Welle 145, eine Antriebs-Steuer-Einheit 148 sowie eine Asymmetrieeinheit/Brems 147 und eine Bremseinheit 149 vorgesehen.

Schließlich weist die in Fig. 9 dargestellte Anordnung, analog zu derjenigen gemäß Fig. 7, zusätzlich ein weiteres Differentialgetriebe 151 und eine Hilfsantriebs-Steuer-Einheit 153 auf, die ebenfalls mit der Welle 150 verbunden ist.

Bevor im folgenden die Wirkungsweise der vorstehend beschriebenen Anordnungen erläutert werden soll, sei ferner noch angemerkt, daß die erfindungsgemäße Antriebs- und Führungsvorrichtung neben angetriebenen Stützanordnungen 17, wie sie in Fig. 4 dargestellt sind, auch nicht angetriebene Stützanordnungen 117 aufweisen kann, entsprechend der Anordnung in Fig. 5. Eine solche Stützanordnung ist beispielsweise in der Verkleidung 15 in den Figuren 1 bis 3 untergebracht. In diesem Fall ist die Stützanordnung 117 in der geteilten Führungsschiene 116 verfahrbar und trägt über Koppelstangen 120 und 121 sowie das Drehgelenk 122 die Hochauftriebsklappe 2. Diese Anordnung dient somit lediglich zur Führung, nicht jedoch als Antrieb für die Hochauftriebsklappe 2. In alle vorstehend beschriebenen Ausführungsbeispielen der erfindungsgemäßen Antriebs- und Führungsvorrichtung ist gewährleistet, daß durch die unterschiedliche Vorschubgeschwindigkeit für die einzelnen Stützanordnungen, welche die einzelnen Klappen tragen, eine in Spannweitenrichtung unterschiedlich starke Auslenkung der Klappen realisiert werden kann. Dabei ist zwischen je zwei benachbarten Klappen ein kontinuierlicher Konturausgleich sichergestellt.

Bei der in Fig. 1 dargestellten Anordnung wird die Variation der Auslenkung in Spannweitenrichtung erreicht, daß jedes Spindelgetriebe separat, durch einen elektrischen Stellantrieb bzw. mittels eines hydraulischen Antriebs, angetrieben und dadurch die mit ihm erzeugte Vorschubgeschwindigkeit kontrolliert wird.

Bei der Anordnung gemäß Fig. 2 wird der gleiche Effekt dadurch erreicht, daß die zwischen den Spindelgetriebe an der Antriebswelle angeordneten Differentialgetriebe separat angesteuert werden. Dies kann entweder durch den zusätzlichen Antrieb mittels einer jeweils vorgesehenen Hilfsantriebs-Steuer-Einheit oder aber über eine an der jeweiligen, als Steuerpfad dienenden Welle angeordnete Asymmetrie und Bremseinheit erfolgen. Analoges gilt für die Anordnung gemäß Fig. 3, bei der mehrere Differentialgetriebe von einer Asymmetrie- und Bremseinheit bzw. von einer Hilfsantriebs-Steuer-Einheit kontrolliert werden. Hier wird eine unterschiedliche Vorschubgeschwindigkeit der einzelnen Spindelgetriebe durch eine entsprechende Auslegung der dazwischen angeordneten Differentialgetriebe gewährleistet.

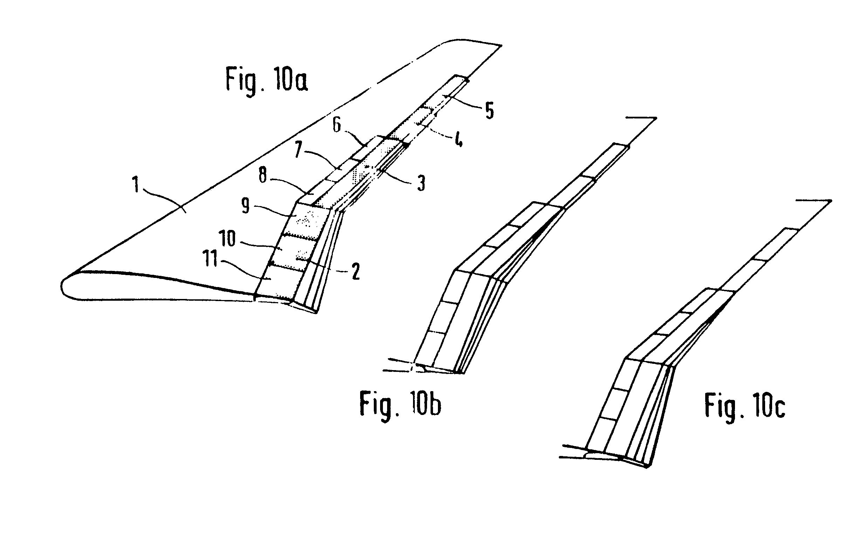

Indem schließlich auch die Antriebseinrichtungen für die weiter außen am Tragflügel angeordneten Flaperons auf die vorstehend beschriebene Weise angesteuert werden, können auch diese in das Konzept einer über den gesamten Hinterkantenklappenbereich variablen Flügelkontur mit einbezogen werden. Dadurch ergibt sich schließlich die in Fig. 10 anhand dreier möglicher Klappenkonfigurationen veranschaulichte Variationsbreite für die Veränderung des Tragflügelprofils in Spannweitenrichtung während der Reiseflugphase.

Die Figur zeigt einen transsonischen Tragflügel entsprechend den vorstehend erläuterten Anordnungen. Mit eingezeichnet in diese Figur und jeweils durch einen Kreis gekennzeichnet ist dabei die Lage der einzelnen, mit unterschiedlicher Vorschubgeschwindigkeit beaufschlagbaren Spindelgetriebe sowie der zugehörigen Anordnungen entsprechend Fig. 4. Ferner ist in dieser Figur durch eine Schattierung derjenige Bereich des Tragflügels kenntlich gemacht, der durch die erfindungsgemäße Antriebs- und Führungsvorrichtung zur Variation des Tragflügelprofils in der Reiseflugphase genutzt werden kann.

Die Abbildungen 10a bis c geben unterschiedliche Kombinationen von Positionen wieder, die die einzelnen Segmente 2 bis 5 einnehmen können. Die in den Figuren angegebenen Zahlen geben dabei an, um welchen Winkel diese Segmente jeweils verschwenkt bzw. wie weit sie, bezogen auf ihre Ausgangsposition, in rückwärtiger Richtung ausgefahren wurden.

Die in den Figuren 10b und c dargestellten Konfigurationen entsprechen dabei zwei extremen Verstellungen. Wie aus den Figuren ersichtlich ist, wird durch die erfindungsgemäße Antriebs- und Führungsvorrichtung dabei zum einen eine große Variationsbreite an möglichen Profiländerungen des Tragflügels erreicht, zugleich ist dabei stets ein aerodynamischer glatter Übergang zwischen den einzelnen Segementen gewährleistet. Abschließend sei noch angemerkt, daß die Zahl der mit der erfindungsgemäßen Vorrichtung antreibbaren Segmente nicht auf die in den Figuren dargestellte Anzahl von vier beschränkt ist, sondern selbstverständlich beliebig gewählt werden kann.

**Patentansprüche**

1. Antriebs- und Führungsvorrichtung eines an einem Flugzeugtragflügel (1) angeordneten Klappensystems, insbesondere eines Hinterklappensystems eines transsonischen Tragflügels für Transport- und Verkehrsflugzeuge, wobei das Klappensystem in Spannweitenrichtung in einzelne Segmente (2-5) unterteilt ist, die über ihre Segmentspannweite jeweils begrenzt torsionsweich ausgebildet und die getrennt ansteuerbar sind, bestehend aus mit den Segmenten kraftschlüssig verbundenen, von einer Antriebseinheit beaufschlagten Spindelgetrieben (25, 28, 29) sowie die Bahnkurve der Segmente beim Ein- und Ausfahren festlegenden Führungsschienen (16, 116), dadurch gekennzeichnet, daß das Antriebssystem für die Spindelgetriebe (25, 28, 29) so ausgebildet ist, daß die Vorschubgeschwindigkeiten der einzelnen Spindelgetriebe unabhängig voneinander steuerbar sind.

2. Antriebs- und Führungsvorrichtung nach Anspruch 1, dadurch gekennzeichnet, daß jedem Spindelgetriebe (25, 28, 29) eine separat ansteuerbare Antriebseinheit (30, 31, 32) zugeordnet ist.

3. Antriebs- und Führungsvorrichtung nach Anspruch 1, bei dem die Spindelgetriebe der zu einer Tragfläche gehörigen Segmente über eine gemeinsame Antriebswelle angetrieben werden, dadurch gekennzeichnet, daß im Antriebswellenstrang (33) zwischen zwei benachbarten Spindelgetrieben (28, 29) ein ansteuerbares Differentialgetriebe (34) angeordnet ist.

4. Antriebs- und Führungsvorrichtung nach Anspruch 3, dadurch gekennzeichnet, daß mehrere, jeweils zwischen benachbarten Spindelgetrieben (25, 28 bzw. 28, 29) an einer Antriebswelle (43) angeordnete Differentialgetriebe (44, 46) über eine gemeinsame Steuereinrichtung (47) beaufschlagbar sind.

5. Antriebs- und Führungsvorrichtung nach Anspruch 4, dadurch gekennzeichnet, daß die Steuereinrichtung aus einer zusätzlich zu einer Antriebs-Steuer-Einheit (48) für eine zweite, die Differentialgetriebe (44, 46) beaufschlagende Antriebswelle (50) vorgesehenen Hilfsantriebs-Steuer-Einheit (53) sowie einer Asymmetrieeinheit/Bremse (47) besteht.

6. Antriebs- und Führungsvorrichtung nach Anspruch 4, dadurch gekennzeichnet, daß die Steuereinrichtung aus einer Asymmetrieeinheit/Bremse (47, 147) besteht.

7. Antriebs- und Führungsvorrichtung nach einem der Ansprüche 1 bis 6, dadurch gekennzeichnet, daß jedem Segment (102, 103) zwei Spindelgetriebe (128, 129 bzw. 125, 130) zugeordnet sind.

8. Antriebs- und Führungsvorrichtung nach einem der Ansprüche 1 bis 6, dadurch gekennzeichnet, daß die benachbart liegenden Enden zweier an einer Tragfläche angeordneter Segmente (2, 3) von einem gemeinsamen Spindelgetriebe (28) beaufschlagbar sind.

9. Antriebs- und Führungsvorrichtung nach einem der Ansprüche 1 bis 8, dadurch gekennzeichnet, daß es sich bei dem Segementen (2, 3, 102, 103) um Hochauftriebsklappen handelt.

10. Antriebs- und Führungsvorrichtung nach einem der Ansprüche 1 bis 8, dadurch gekennzeichnet, daß die Segmente (2-5) sowohl aus Hochauftriebsklappen (2, 3) als auch aus in den äußeren Endbereichen der Tragflächen (1) angeordneten Flaperons (4, 5) bestehen.

**Claims**

1. A driving and guiding mechanism of a flap system arranged on an airfoil (1), in particular of a trailing edge flap system of a trans-sonic aeroplane wing for commercial and transport aircraft, whereby in the span direction the flap system is divided into separate segments which over their extent have a limited torsion-soft configuration and are individually actuated, comprizing spindle mechanisms (25, 28, 29) which are frictionally connected to the segments and acted on by a drive unit, and guide rails (16, 116) which determine the path curve of the segments during extension/retraction, characterized in that the drive system for the spindle mechanisms (25, 28, 29) is designed so that the rates of feed of the individual spindle mechanisms can be controlled independently of each other.

2. A driving and guiding mechanism as claimed in Claim 1, characterized in that a driving unit (30, 31, 32) that is controlled separately is associated with each spindle mechanism (25, 28, 29).

3. A driving and guiding mechanism as claimed in Claim 1, in which the spindle mechanisms of the segments that belong to a wing are actuated by a common power shaft, caracterized in that a controllable differential mechanism (34) is arranged in the power shaft line between two adjacent spindle mechanisms (28, 29).

4. A driving and guiding mechanism as claimed in Claim 3, characterized in that there are a number of differential mechanisms (44, 46) arranged between adjacent spindle mechanisms (25, 28 or 28, 29) on a power shaft (43) which are actuated by a common controlling device (47).

5. A driving and guiding mechanism as claimed in Claim 4, characterized in that the controlling device is comprised of a booster control unit (53), this being additional to a drive control unit (48) for driving a second power shaft (50) that controls the differential mechanism (44, 46), and also comprised of an asymmetry unit/brake (47).

6. A driving and guiding mechanism as claimed in Claim 4, characterized in that the controlling device is comprised of an asymmetry unit-brake (47, 147).

7. A driving and guiding mechanism as claimed in any of claims 1 through 6, characterized in that there are two spindle mechanisms (128, 129 or 125, 130) associated with each segment (102, 103).

8. A driving and guiding mechanism as claimed in any of the claims 1 through 6, characterized in that the adjacent ends of two segments (2, 3) arranged on a wing can be actuated by a common spindle mechanism (28).

9. A driving and guiding mechanism as claimed in any of the claims 1 through 8, <u>characterized in that</u> the segments (2, 3, 102, 103) are high-lift flaps.

10. A driving and guiding mechanism as claimed in any of claims 1 through 8, <u>characerized in that</u> the segments (2-5) are comprized of high-lift flaps (2, 3) as well as flaperons (4, 5) arranged in the outer end regions of the wings.

**Revendications**

1. Dispositif d'entraînement et de guidage pour un système de volets prévu sur l'aile portante d'un avion notamment un système de volets d'extrados d'une aile portante transsonique d'un avion de transport de passagers et de frêt, le système des volets étant subdivisé en différents segments (2-5) dans la direction de la largeur de l'aile, segments qui présentent respectivement une certaine souplesse limitée à la torsion dans le sens de la largeur des segments et qui peuvent être commandés séparément, dispositif composé de transmissions à broches (25, 28, 29) reliées aux segments par une liaison par la force et coopérant avec une unité motrice, ainsi que des rails de guidage (16, 116) qui définissent la trajectoire des segments lors de leur mouvement de sortie et de rentrée, dispositif caractérisé en ce que le système d'entraînement des transmissions à broches (25, 28, 29) est conçu de façon que les vitesses d'avancée des différentes transmissions à broches puissent être commandées independamment les unes des autres.

2. Dispositif d'entraînement et de guidage selon la revendication 1, caractérisé en ce qu'à chaque transmission à broches (25, 28, 29) est associée une unité d'entraînement (30, 31, 32) susceptible d'être commandée séparément.

3. Dispositif d'entraînement et de guidage selon la revendication 1 dans lequel les transmissions à broches des segments appartenant à une surface portante sont entraînées par un arbre d'entraînement commun, caractérisé en ce que dans la ligne de l'arbre d'entraînement (33) entre deux transmissions á broches voisines (28, 29) se trouve une transmission différentielle (34) commandée.

4. Dispositif d'entraînement et guidage selon la revendication 3, caractérisé en ce que plusieurs transmissions différentielles (44, 46) prévues respectivement entre des transmissions à broches voisines (25, 28 ou 28, 29) sur un arbre d'entraînement (43) sont sollicitées par un dispositif de commande (47) commun.

5. Dispositif d'entraînement et de guidage selon la revendication 4, caractérisé en ce que le dispositif de commande se compose en plus d'une unité de commande d'entraînement (48), d'une unité de commande d'entraînement auxiliaire (53) pour un second arbre d'entraînement (50) commandant la transmission différentielle (44, 46) ainsi que d'une unité asymétrique/frein (47).

6. Dispositif d'entraînement et de guidage selon la revendication 4, caractérisé en ce que le dispositif de commande se compose d'une unité asymétrique/frein (47, 147).

7. Dispositif d'entraînement et de guidage selon l'une des revendications 1 à 6, caractérisé en ce qu'à chaque segment (102, 103) sont associées deux transmissions à broches (128, 129 ou 125, 130).

8. Dispositif d'entraînement et de guidage selon l'une des revendications 1 à 6, caractérisé en ce que les extrémités voisines de deux segments (2, 3) associes à une surface portante sont commandées par une transmission à broches (28) commune.

9. Dispositif d'entraînement et de guidage selon l'une des revendications 1 à 8, caractérisé en ce que les segments (2, 3, 102, 103) sont des volets hypersustentateurs.

10. Dispositif d'entraînement et de guidage selon l'une des revendications 1 à 8, caractérisé en ce que les segments (2-5) sont constitués à la fois par les volets hypersustentateurs (2, 3) ainsi que des flaperons (4, 5) prévus dans les zones d'extrémité extérieures des surfaces portantes (1).

Fig. 1

Fig. 2

Fig. 3

Fig. 4

Fig. 5

Fig. 6

Fig. 7

0 215 211

Fig. 8

Fig. 9

Fig. 10a

Fig. 10b

Fig. 10c